(19) **Europäisches Patentamt**
**European Patent Office**
**Office européen des brevets**

(11) **EP 2 296 332 A1**

(12) **EUROPEAN PATENT APPLICATION**

(43) Date of publication:
**16.03.2011 Bulletin 2011/11**

(51) Int Cl.:
***H04L 27/26*** *(2006.01)*

(21) Application number: **09305829.5**

(22) Date of filing: **10.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicants:
• **ST-Ericsson (France) SAS**
**38000 Grenoble (FR)**
• **ST-Ericsson SA**
**1228 Plan-les-Ouates**
**Geneva (CH)**

(72) Inventors:
• **Toufik, Issam**
**06160, JUAN-LES-PINS (FR)**
• **Bury, Andreas**
**01099, DRESDEN (DE)**

(74) Representative: **Zapalowicz, Francis**
**Casalonga & Partners**
**Bayerstrasse 71/73**
**80335 München (DE)**

(54) **Low complexity primary synchronization signal detection with coarse frequency offset estimation for LTE wireless communication system.**

(57)     Method of detection of a Primary Synchronization Signal, named PSS, within an incident signal comprising:

-performing correlations of the said incident signal containing PSS with known reference PSS sequences and frequency offset testing in the frequency domain.

FIG.7

**Description**

The invention relates to the synchronization process with a signal, especially the synchronization of the mobile cell phone, and more particularly to a simplified process for treating the synchronization signal sent by a base station. The present invention is for example applicable to the LTE (Long Term Evolution) wireless communication system defined by the 3GPP standardization committee and can be included for example in the Release 8 specification.

The LTE standard uses two synchronization signals, i.e. the Primary Synchronization Signal (PSS) and the Secondary Synchronization Signal (SSS). With the PSS, the User-Equipment (UE) acquires the slot timing and the carrier frequency. Then with the SSS, the UE determines the identification of the cell identity.

It is necessary to detect the PSS within a received incident signal. The PSS is a sequence of a known type. In LTE, there are three PSS sequences corresponding to the three cell physical-layer identities. The exact sequence of the PSS and its transmission time are not known and have to be detected.

In order to determine within the incident signal the PSS sequence and the PSS timing, a correlation process of the incident signal with known PSS time domain sequences is performed. The incident signal is correlated with different known PSS time domain sequences at all timing samples within a LTE radio frame.

Among the results of these different correlations, the PSS sequence and the timing offering the best-correlation result is detected.

During the PSS detection, the UE may experience frequency offsets. These offsets correspond to the difference between the frequency tuned by the cell phone oscillator and the frequency of the received signal. Maximum frequency drifts of 5ppm and 11ppm were identified for respectively DCXO (Digital compensated crystal oscillator) and VC-TCXO (Voltage control temperature compensated crystal oscillator) oscillators.

For such high frequency offsets, the correlation calculation is perturbed. It is then necessary to perform PSS sequence correlation calculation at several frequency offset hypothesis by applying to the signal a frequency rotation (multiplication of the $k^{th}$ received sample by $\exp(j.2\pi.f_i.k)$) equal to the opposite of the tested offset frequency, this offset being applied prior to the correlations computation.

As the number of sequence to be tested for correlation is generally three, the average number of operations for the PSS detection in the state of art is three correlations and one complex multiplication per sample for each frequency to be tested. It is a complicated process necessitating 4'627'200 complex multiplications for five frequencies to be tested and a sampling rate of 960KHz.

According to an embodiment, it is proposed a method for an efficient implementation of LTE PSS correlations computation.

A method using Fast Fourier Transform (FFT), which can simplify the PSS detection with any frequency drift, is also proposed.

According to an embodiment, a method is proposed for enabling correlations calculation and a coarse frequency offset estimation with a low complexity algorithm.

In view of the foregoing, a method and a device are proposed allowing in particular low complexity primary synchronization signal detection with coarse frequency offset estimation for LTE.

According to an aspect, it is proposed a method of detection of a PSS Primary Synchronization Signal, named PSS, within an incident signal, comprising performing correlations of said incident signal containing PSS with known reference PSS sequences

According to a general feature of this aspect, the correlations are performed in the frequency domain.

Working in the frequency domain, the correlation calculation is easier and comprises a smaller number of complex multiplications.

According to an embodiment, performing said correlations in the frequency domain comprises:

- segmenting the incident signal containing PSS into consecutive blocks having the same number of elements
- padding each block with zeros to obtain a padded block whose size corresponds to the window size of a Fast Fourier Transform (FFT) module
- processing said padded blocks, said processing comprising performing a FFT of each padded block to obtain a FTT transformed block, and for each known reference PSS sequence:

    - multiplying the FFT transformed block with the FFT transformed known reference PSS sequence,
    - performing an Inverse FFT on the result of the multiplication to obtain an intermediate block
    - combining all the intermediate blocks.

The Fast Fourier Transform is a widely used transform. In addition to being necessary for the overlap-add method to work correctly, the padding can enable the Fast Fourier Transform to process block whose length can be expressed as $2^n$. This length can be processed faster.

Said combining step may comprise an Overlap-add based process or an Overlap-save based process.

These two algorithms are widely used and enable to process the whole digital signal in consecutive small blocks.

According to an embodiment, performing said correlations further comprises applying frequency rotations in the frequency domain.

Applying said frequency rotations may comprise cyclically shifting said FFT transformed blocks in the frequency domain.

The primary synchronization needs a frequency rotation to be applied before the correlation. In the state of the art, a complex multiplication per received sample was necessary for each frequency to be tested. Working in the frequency domain enables to apply a frequency rotation as a cyclic shift. The complexity of a shift is far less than the complexity of complex multiplications.

According to another aspect, it is proposed a device for detecting Primary Synchronization Signal, named PSS, within an incident signal comprising processing means configured for performing correlations of said incident signal containing PSS with known reference PSS sequences

According to general feature of this another aspect, the processing means are configured to perform the correlations in the frequency domain.

According to an embodiment, the processing means comprise:

- segmenting means configured for segmenting the said incident signal containing PSS into consecutive blocks having the same number of elements
- padding means configured for padding each block with zeros to obtain a padded block whose size corresponds to the window size of a Fast Fourier Transform (FFT) module
- a processing stage configured for processing each padded block, said processing stage comprising:

  - FFT means configured for performing a FFT of each padded block to deliver a FFT transformed block
  - multiplying means configured for multiplying the FFT transformed block with the FFT transformed known reference PSS sequence,
  - IFFT means configured for performing an Inverse FFT on the result of the multiplication to deliver an intermediate block
  - combining means configured for combining all the intermediate blocks.

Combining means may comprise an Overlap-save based calculator or an Overlap-add based calculator.

The processing means may further comprise means configured for applying frequency rotations in the frequency domain.

According to an embodiment, the means configured for applying frequency rotations in the frequency domain comprises means configured for applying a cyclic shift of the said FFT transformed blocks in the frequency domain.

All these means may be realized by software modules within a processor and/or by specific components within an integrated circuit.

According to another aspect, it is proposed a wireless communication apparatus, for example a mobile phone, comprising a device as defined above.

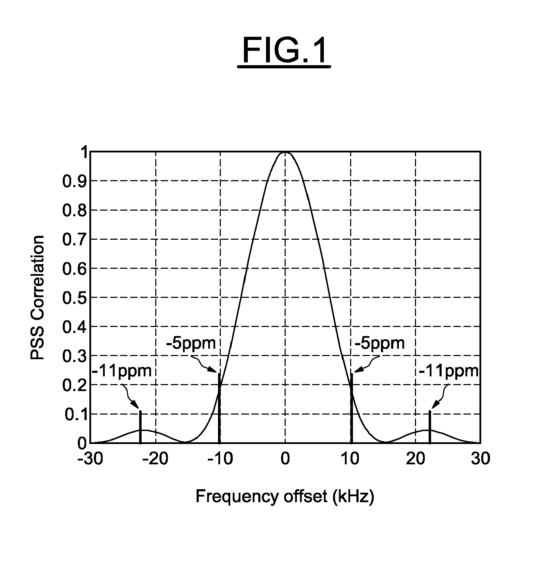

Other advantages and features of the invention will appear on examining the detailed description of embodiments, these being in no way limiting and of the appended drawings in which: figure 1 illustrates an autocorrelation evolution versus frequency offsets;

figure 2 illustrates the state of art for PSS synchronization;
figures 3 & 4 illustrate a PSS correlation using an overlap and add based solution;
figures 5 & 6 illustrate a PSS correlation using an overlap and save based solution;
figure 7 illustrates a PSS correlation including a cyclic shift;

The figure 1 comprises one horizontal axis on which a frequency offset in kHz is represented and one vertical representing the value of the correlation without unity varying from 0 to 1. The curve represents the value of the correlation between two sequences i.e. a PSS sequence without any frequency offset, and the same PSS sequence with a frequency offset having a value in the abscissa axis.

In other words, figure 1 plots the PSS autocorrelation as a function of the frequency offset. It is clear from this curve that for high frequency offsets (5ppm, 11ppm), the autocorrelation levels are very low, not allowing time synchronization to the base station. It is thus necessary to perform PSS tests at several frequency offset hypothesis by applying to the signal a frequency rotation equal to the opposite of the tested offset prior to the correlation computation.

In the present example, the used PSS sequences are the Zadoff-Chu (ZC) sequences defined in frequency-domain according to:

$$ZC_M(n) = \begin{cases} e^{-j.\dfrac{\pi.M.n.(n+1)}{63}} & n = 0,1,...,30 \\ e^{-j.\dfrac{\pi.M.(n+1).(n+2)}{63}} & n = 31,32,...,61 \end{cases} \qquad (1)$$

Where $n$ is the sub-carrier index and $M$ is the ZC sequence root. This formula is actually giving the phase $d_M(n)$ of the coefficient of each sub carriers. The selected roots for the PSS sequences are $M$=25, 29, 34. There are thus three different sequences: $ZC_{25}$, $ZC_{29}$, and $ZC_{34}$.

In other words, one of the computed sequences ($ZC_{25}$, $ZC_{29}$, or $ZC_{34}$) is sent by the base station as an OFDM burst every 5ms. Zadoff-Chu sequences have been chosen for their good auto and cross correlation properties. For more details on PSS and Zadoff-Chu sequences, the man skilled in the art can refer to the literature regarding LTE, and particularly to the following document:

"LTE - The UMTS Long Term Evolution: from Theory to Practice" by SESIA Stefania, TOUFIK Issam, BAKER Matthew, published by Wiley, 2009. (ISBN: 978-0-470-69716-0)

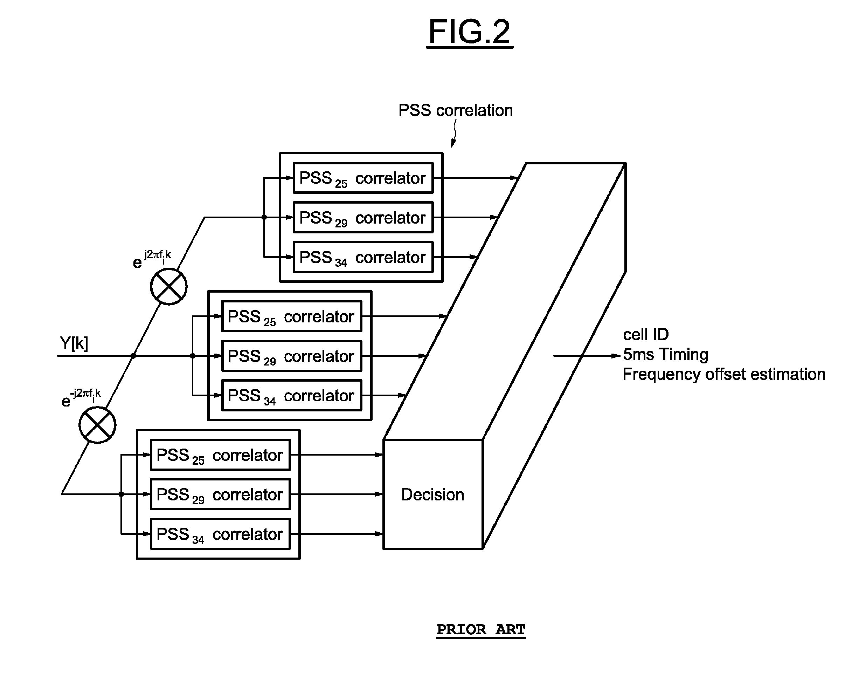

Figure 2 illustrates a PSS correlator system with coarse frequency offset estimator according to the prior art. First, as mentioned above, a frequency rotation is necessary. This rotation is realized with a multiplication of the received digital signal Y[k], received at time instant $k$, by $\exp(j.2\pi.f_i.k))$. Three different frequency offsets are tested: fi, - fi, 0 in the illustrated example.

Then, after the multiplication, a PSS correlation is processed in each of the three branches. Each PSS correlator simultaneously runs three aperiodic correlations of the received signal against the three different PSS correlation sequences ($ZC_{25}$, $ZC_{29}$, $ZC_{34}$) of length N each. The respective correlator output signals are squared. These operations are summarized in equation (2) for a 0 frequency offset, where $A_M[m] = \left| \sum_{k=0}^{N-1} Y[m+k].P_M^*[k] \right|^2$ is the result, at time instant m, of the

correlation of the received signal with the time domain transform of $ZC_M$:

$$A_M[m] = \left| \sum_{k=0}^{N-1} Y[m+k].P_M^*[k] \right|^2 \qquad (2)$$

where $m$ is the time index within the radio-frame, $P_M$ is the PSS time domain sequence of root $M$ (i.e. the IFFT of the sequence given by equation (1) with $M$ equals either 25, 29 or 34), $N$ is the PSS time domain sequence length and $Y[k]$ is the received signal at time instant $k$.

Then according to the nine results (three different frequencies and three different sequences) a decision is taken, which contains:

-    The value of the root (25, 29 or 34) of the Zadoff Chu PSS sequence, this value is corresponding to the cell identity;
-    The estimated frequency offset, in case illustrated -fi, +fi or 0;
-    The timing synchronization of the slot.,

The choice of these factors is based on a maximum correlation value. One of the disadvantages of this solution is notably the high complexity because of the correlation calculation (2).
This complexity is even higher because the correlation calculation and a rotation are repeated for each frequency.
An calculation expressing the complexity in number of complex multiplications can be done, with the following hypothesis:

- 4'800 samples for 5ms (sampling rate of 960KHz)
- 4'800.64 complex multiplications for correlation according to equation (2)
- 3 ZC sequences to test
- 3 different frequency offsets.
- To calculate the frequency offsets, each of the two non zero offsets (-fi,+fi) necessitates 4800.64 complex multiplications.

The result is: 4'800.(64.3.3+2)=2'774'400 complex multiplications with three different frequency offsets.

Moreover, knowing that the frequency offset steps are computed such that an acceptable correlation level is captured by one of the tested frequencies, an augmentation of the number of frequencies to be tested is therefore possible.

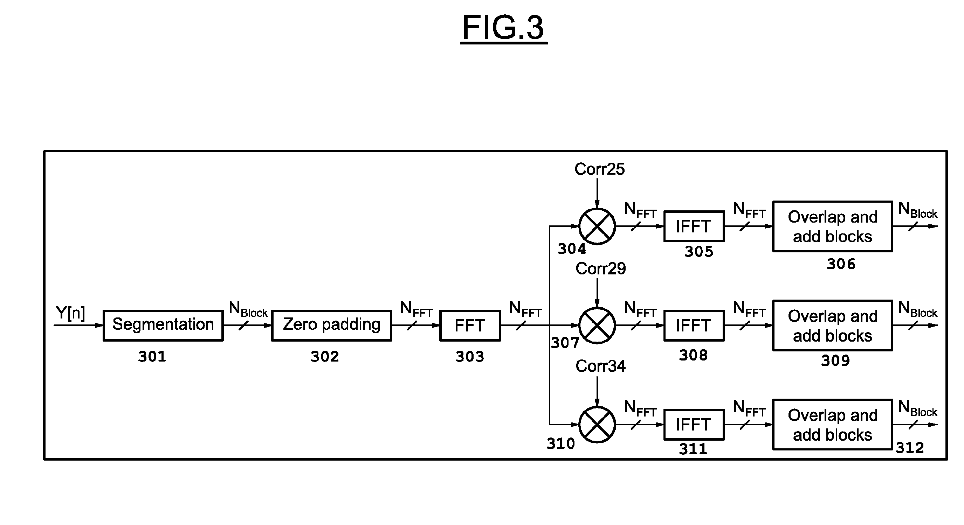

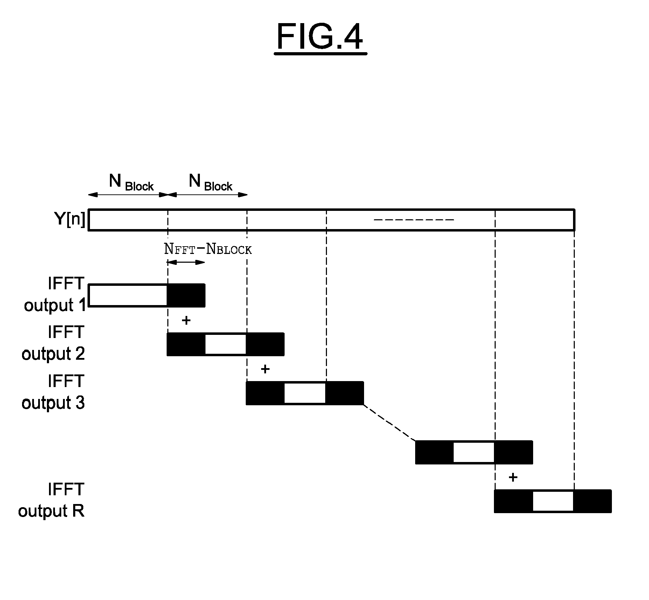

In figures 3 & 4, a possible solution according to the invention using Overlap-add based PSS correlation is presented.

The input signal is first segmented by the segmenting means (301) into consecutive non-overlapping blocks of length $N_{Block}$. After the segmentation, each block is zero padded to the length $N_{FFT}$ by the zero padding means (302). A Fast Fourier Transform (FFT) is processed on each block by the FFT means (303). The resulting frequency-domain vector and each three different complex-valued correlation vectors are multiplied element-wise by the multiplying means (304, 307, and 310). These correlation vectors are pre-computed. They comprise the FFT of the zero-padded time-domain Zadoff Chu PSS sequences ($ZC_{25}$, $ZC_{29}$, $ZC_{34}$). After the frequency-domain multiplication, blocks are converted back to the time domain using Inverse FFT (IFFT) means (305, 308, and 311). The blocks outputted from the IFFT are then summed. As they overlap, each last samples $N_{FFT}$ - $N_{Block}$ of block number i are summed with the first samples $N_{FFT}$ - $N_{Block}$ of the next block number i+1. This combining is realized by the "overlap and add blocks" means (306, 309, and 312).

The length of the block is chosen according to $N_{Block} \leq N_{FFT}$ - Ncorr + 1, where $N_{Corr}$ is the correlation length. The correlation length $N_{Corr}$ is equal to N, the PSS time domain sequence length. $N_{FFT}$ is the size of Fast Fourier Transform (FFT) processed on each block (values available are 128, 256, 512, 1024, ...). The maximum length of $N_{Block}$ is chosen in order that the block after correlation according to equation (2) is inferior to $N_{FFT}$. The constraint of this choice is the necessity of a frequency domain multiplication which can be processed by the IFFT.

In this solution, correlation can be advantageously done in the frequency domain by vectors element-wise complex multiplications.

All the means used in this process may be realized by software modules within a processor and/or by specific components within an integrated circuit.

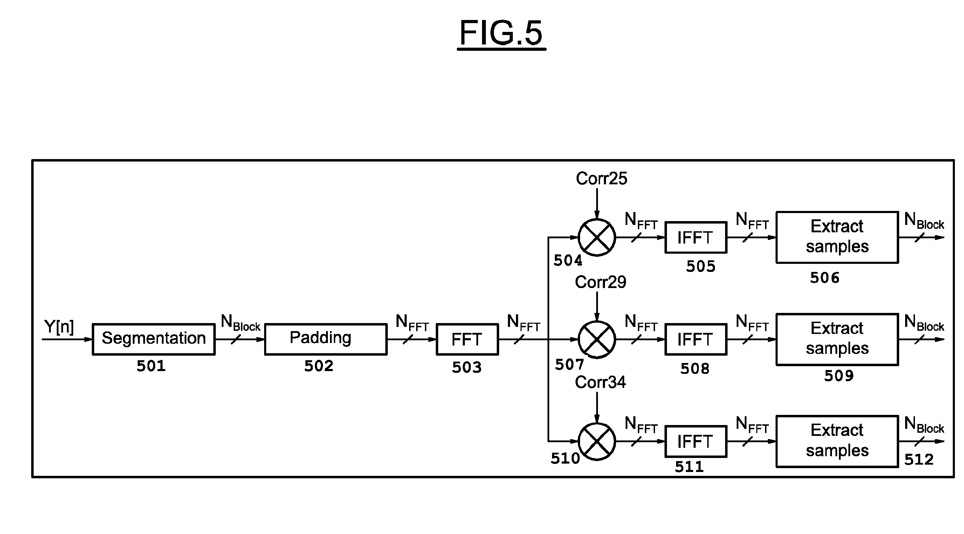

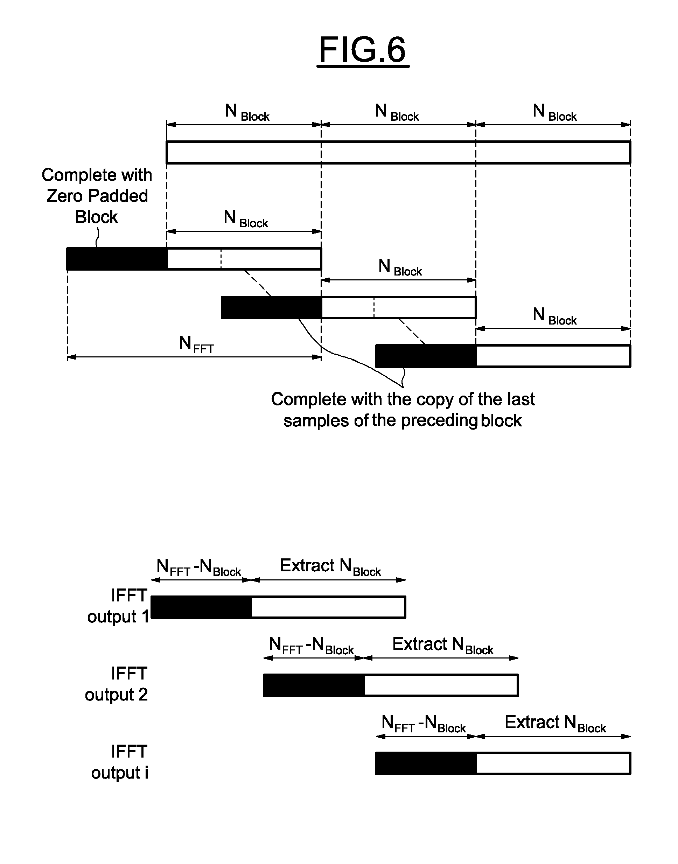

In figures 5 & 6, a solution using Overlap-save based PSS correlation is presented. The principle used is the same as described in the Overlap-add based PSS correlation; the only difference is the use of overlap-save filtering techniques for FFT and IFFT.

The input signal is first segmented into consecutive blocks of length $N_{Block}$ by the segmenting means (501). Then each block is padded to the length $N_{FFT}$ by the padding means (502). For the first block before the first sample a block $N_{FFT}$ - $N_{Block}$ zero padded is added. In the subsequent blocks number i the first part are padded with $N_{FFT}$ - $N_{Block}$ last samples of the preceding block number i-1. A Fast Fourier Transform (FFT) is then processed on each block of size $N_{FFT}$ by the FFT means (505, 508 and 511). The resulting frequency-domain vector is multiplied and each three different complex-valued correlation vectors are multiplied element-wise by multiplying means (504, 507, and 510). The correlation vectors are pre-computed as padded FFTs of the 3 time-domain Zadoff Chu PSS sequences ($ZC_{25}$, $ZC_{29}$, $ZC_{34}$). After the frequency-domain multiplication, blocks are converted back to the time domain using the IFFT means (505, 508, and 511). The $N_{FFT}$ - $N_{Block}$ first samples of each IFFT output number i are discarded, and the $N_{Block}$ remaining samples are extracted. The blocks can then be concatenated. The combining is realized by the illustrated "Extract samples" means (506, 509, and 512).

The length of the block must be chosen according to the restriction, $N_{Block} \leq N_{FFT}$ - $N_{Corr}$ + 1, to ensure that the size of correlation of each block according to equation (2) is inferior to $N_{FFT}$. This choice is necessary to be sure that the result of the frequency domain multiplication can be processed by the IFFT.

All these means may be realized by software modules within a processor and/or by specific components within an integrated circuit.

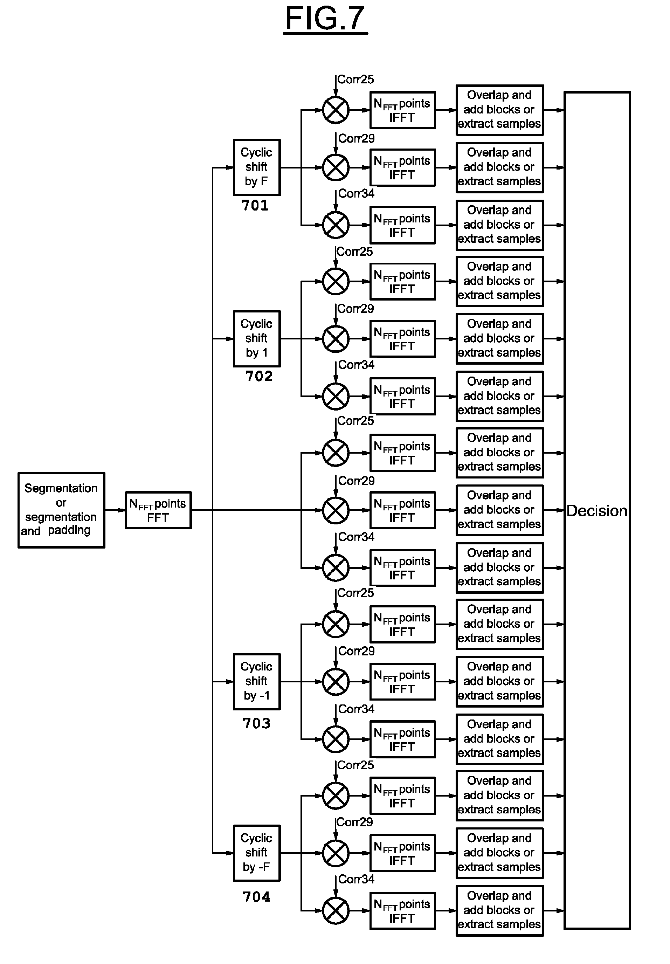

In figure 7, a low complexity solution for different frequency offset tests correlation calculation and coarse estimation is proposed.

As described previously and shown in figure 1, several frequency offsets hypothesis should be tested. A frequency rotation equal to the opposite of the tested offset is applied to the signal prior to the autocorrelation computation. The frequency rotation of the state of the art consists of multiplying each sample of the received signal Y[k] by $\exp(j.2\pi.f_i.k)$.

Instead of this very computational consuming implementation, the frequency rotation is performed by means of a cyclic shift of the signal after FFT and prior to multiplication by the PSS sequences. A cyclic shift by L corresponds to a frequency rotation of L.$\Delta f$, with $\Delta f$:

$$\Delta f = 15 \cdot \frac{64}{N_{FFT}} \cdot \frac{F_s}{960} \, \text{kHz} \qquad\qquad (3)$$

where $N_{FFT}$ is the FFT size, $F_s$ is the sampling rate on kHz.

The larger is the value of the FFT size, the better is the Frequency Offset Estimation resolution.

For example with $N_{FFT}=512$ and $Fs=960$ kHz, the frequency spacing $\Delta f$ is 1,875 kHz and precision of the frequency estimation is significantly inferior to 15kHz. This value represents, in the case of LTE standard, the sub carrier spacing during signal generation at the base station.

In figure 7, two alternatives are actually illustrated: one using the overlap-add based method, the other the overlap-save based method.

According to the overlap-add based method, the sequence received Y[k] is first segmented into block of length $N_{Block}$ and is zero padded to the length $N_{FFT}$. A FFT is then processed to each block. The signal then goes through several branches each one testing one possible frequency offset. The means used for this process are identical to the precedent embodiments.

Then, as mentioned above instead of signal rotation in the time domain (i.e. by multiplications by exponentials), a cyclic shift is applied. The cyclic shift is realized by means configured for applying a cyclic shift (701, 702, 703, and 704); these means may be realized by software modules within a processor and/or by specific components within an integrated circuit.

Then the same process as described in figure 3, 4, 5, 6 is then applied to the signal shifted by identical means.

According to overlap-save based method, the sequence received Y[k] is first segmented into block of length $N_{Block}$ and is padded to the length $N_{FFT}$. A FFT is then processed to each block. The signal then goes through several branches each one testing one possible frequency offset with a cyclic shift. The same process as described in figure 5 & 6 is then applied to the signal shifted.

The decision process is common for the two methods and is similar to the one made in the state of the art, the best correlation result enables the determination of:

- the value of the cell identity;
- the estimated frequency offset, e.g. from $-F.\Delta f$ to $+F.\Delta f$, with $\Delta f$ given by equation (3)
- the timing synchronization of the slot.

A complexity calculation can be done for the method according to the invention with the following hypothesis:

- $N_{FFT} = 512$
- size of one block 512-64+1=449
- 4'800 samples for 5ms
- 3 ZC sequences to test
- 3 different frequency offsets of which 2 non zero frequency offsets

The number of block is: 4800 / 449. For each block the FFT consumes $(512/2).(\log_2(512))=2'304$ multiplications where $\log_2$ corresponds to a logarithm in base 2. Consequently, for each frequency and each ZC sequence, an IFFT with a complexity equals to 2304 is necessary. The final result is then:

(4800/449).(2304+3.3.(512+2304))=295'569. This complexity does not include the computation of the frequency domain ZC sequence for the multiplication already calculated and stored as mentioned earlier. This result is to be compared with the precedent result according to the prior art: 2'774'400.

Intermediate resolutions of frequency-offset estimator are also possible by removing some branches: considering for example only one branch on two will results on half the resolution but will also almost have half complexity reduction. The tradeoff between complexity and resolution is to be determined based on the performance requirements.

All the means used may be realized by software modules within a processor and/or by specific components within an integrated circuit.

The invention as described provides an easy implementation enabling low complexity algorithm. Working in the frequency domain enables first an easy correlation calculation. It enables also to apply a frequency offset as a fast cyclic shift instead of a complex multiplication. The relative high drift of a cheaper local oscillator can be compensated by this correlator with no cost premium.

**Claims**

1. Method of detection of a Primary Synchronization Signal, named PSS, within an incident signal comprising:

   - performing correlations of said incident signal containing PSS with known reference PSS sequences **characterized in that** the correlations are performed in the frequency domain.

2. Method according to claim 1 wherein performing said correlations in the frequency domain comprises:

   - segmenting (301, 501) the incident signal containing PSS into consecutive blocks having the same number of elements (Nb)
   - padding each block with zeros (302, 502) to obtain a padded block whose size corresponds to the window size ($N_{FFT}$) of a Fast Fourier Transform (FFT) module
   - processing said padded blocks, said processing comprising performing a FFT (303, 503) of each padded block to obtain a FTT transformed block, and for each known reference PSS sequence:

      - multiplying the FFT (304, 307, 310, 504, 507, 510) transformed block with the FFT transformed known reference PSS sequence,
      - performing an Inverse FFT (305, 308, 311, 505, 508, 511) on the result of the multiplication to obtain an intermediate block
      - combining (306, 309, 312, 506, 509, 512) all the intermediate blocks.

3. Method according to claim 2, wherein said combining step comprises an Overlap-add based process (306, 309, 312).

4. Method according to claim 2, wherein said combining step comprises an Overlap-save based process (506, 509, 512).

5. Method according to any of the claims 1 to 4, wherein performing said correlations further comprises applying frequency rotations in the frequency domain (701, 702, 703, 704).

6. Method according to claims 2 and 5 wherein applying frequency rotations comprises cyclically shifting said FFT transformed blocks in the frequency domain (701, 702, 703, 704).

7. Device for detecting a Primary Synchronization Signal, named PSS, within an incident signal comprising:

   - processing means configured for performing correlations of said incident signal containing PSS with known reference PSS sequences **characterized in that** the processing means are configured to perform the correlations in the frequency domain.

8. Device according to claim 7 wherein the processing means comprise:

   - segmenting means (301, 501) configured for segmenting the said incident signal containing PSS into consecutive blocks having the same number of elements (Nb)
   - padding means (302, 502) configured for padding each block with zeros to obtain a padded block whose size corresponds to the window size ($N_{FFT}$) of a Fast Fourier Transform (FFT) module
   - a processing stage configured for processing each padded block, said processing stage comprising:

      - FFT means (303, 503) configured for performing a FFT of each padded block to deliver a FFT transformed block
      - multiplying means (304, 307, 310, 504, 507, 510) configured for multiplying the FFT transformed block with the FFT transformed of known reference PSS sequence ,
      - IFFT means (305, 308, 311, 505, 508, 511) configured for performing an Inverse FFT on the result of the multiplication to deliver an intermediate block
      - combining means (306, 309, 312, 506, 509, 512) configured for combining all the intermediate blocks.

9. Device according to claim 8, wherein said combining means comprises an Overlap-add based calculator (306, 309, 312).

10. Device according to claim 8, wherein said combining means comprises an Overlap-save based calculator (506, 509, 512).

11. Device according to anyone of the claims 7 to 10, wherein the processing means further comprises means (701, 702, 703, 704) configured for applying frequency rotations in the frequency domain.

12. Device according to claims 8 and 11, wherein the means configured for applying frequency rotations in the frequency domain comprises means (701, 702, 703, 704) configured for applying a cyclic shift of the said FFT transformed blocks in the frequency domain.

13. Wireless communication apparatus, comprising a device according to any one of claims 7 to 12.

14. Wireless communication apparatus according to claim 13, belonging to a LTE wireless communication system.

# FIG.1

# FIG.2

PSS correlation

PSS$_{25}$ correlator

PSS$_{29}$ correlator

PSS$_{34}$ correlator

$e^{j2\pi f_i k}$

PSS$_{25}$ correlator

PSS$_{29}$ correlator

PSS$_{34}$ correlator

Y[k]

$e^{-j2\pi f_i k}$

PSS$_{25}$ correlator

PSS$_{29}$ correlator

PSS$_{34}$ correlator

Decision

cell ID
5ms Timing
Frequency offset estimation

PRIOR ART

EP 2 296 332 A1

# FIG.3

Y[n] → Segmentation **301** → $N_{Block}$ → Zero padding **302** → $N_{FFT}$ → FFT **303** → $N_{FFT}$

Corr25 → ⊗ **304** → $N_{FFT}$ → IFFT **305** → $N_{FFT}$ → Overlap and add blocks **306** → $N_{Block}$

Corr29 → ⊗ **307** → $N_{FFT}$ → IFFT **308** → $N_{FFT}$ → Overlap and add blocks **309** → $N_{Block}$

Corr34 → ⊗ **310** → $N_{FFT}$ → IFFT **311** → $N_{FFT}$ → Overlap and add blocks **312** → $N_{Block}$

EP 2 296 332 A1

# FIG.4

FIG.5

# FIG.6

$N_{Block}$     $N_{Block}$     $N_{Block}$

Complete with
Zero Padded
Block

$N_{Block}$

$N_{Block}$

$N_{FFT}$

$N_{Block}$

Complete with the copy of the last
samples of the preceding block

$N_{FFT}-N_{Block}$    Extract $N_{Block}$

IFFT
output 1

$N_{FFT}-N_{Block}$    Extract $N_{Block}$

IFFT
output 2

$N_{FFT}-N_{Block}$    Extract $N_{Block}$

IFFT
output i

# FIG.7

**Europäisches Patentamt**
**European Patent Office**
**Office européen des brevets**

# EUROPEAN SEARCH REPORT

Application Number

EP 09 30 5829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 953 982 A1 (SEQUANS COMM [FR]) 6 August 2008 (2008-08-06) | 1-4, 7-10, 13-14 | INV. H04L27/26 |
| Y | * page 2, lines 40-57 * | 5-6, 11-12 | |
| X | LUCENT TECHNOLOGIES: "RACH in Support of High-Speed UEs" 3GPP DRAFT; R1-062387, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Tallinn; 20060823, 23 August 2006 (2006-08-23), XP050102905 [retrieved on 2006-08-23] | 1-4, 7-10, 13-14 | |
| Y | * page 2, last paragraph; figure 3 * | 5-6, 11-12 | |
| Y | WO 2006/130502 A2 (QUALCOMM INC [US]; WALTON JAY RODNEY [US]; WALLACE MARK S [US]) 7 December 2006 (2006-12-07) | 5-6, 11-12 | TECHNICAL FIELDS SEARCHED (IPC) |
| A | * paragraph [0060] * | 1-4, 7-10, 13-14 | H04L |

The present search report has been drawn up for all claims

| Place of search | Date of completion of the search | Examiner |
|---|---|---|
| Munich | 18 March 2010 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 296 332 A1

**ANNEX TO THE EUROPEAN SEARCH REPORT
ON EUROPEAN PATENT APPLICATION NO.**

EP 09 30 5829

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2010

| Patent document cited in search report | | Publication date | Patent family member(s) | | Publication date |
|---|---|---|---|---|---|
| EP 1953982 | A1 | 06-08-2008 | US 2008279322 | A1 | 13-11-2008 |
| WO 2006130502 | A2 | 07-12-2006 | CA 2609423 | A1 | 07-12-2006 |
| | | | EP 1889372 | A2 | 20-02-2008 |
| | | | JP 2008546312 | T | 18-12-2008 |
| | | | KR 20080014884 | A | 14-02-2008 |
| | | | KR 20090057336 | A | 04-06-2009 |
| | | | US 2006274820 | A1 | 07-12-2006 |
| | | | US 2009122927 | A1 | 14-05-2009 |
| | | | US 2009290664 | A1 | 26-11-2009 |

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SESIA Stefania ; TOUFIK Issam ; BAKER Matthew.** LTE - The UMTS Long Term Evolution: from Theory to Practice. Wiley, 2009